# EUROPEAN PATENT SPECIFICATION

(11) **EP 4 145 050 B1**
(45) Date of publication and mention of the grant of the patent: **08.10.2025**
(21) Application number: 21795743.0
(22) Date of filing: 02.03.2021
(51) Int. Cl.: F24F 1/0014, F24F 13/14, F24F 11/79, F24F 11/74, F24F 110/10, F24F 140/00, F24F 11/86

(54) **CONTROL METHOD FOR AIR CONDITIONER**
STEUERUNGSVERFAHREN FÜR KLIMAANLAGE
PROCÉDÉ DE COMMANDE POUR CLIMATISEUR

(30) Priority: 27.04.2020 CN 202010344397
(43) Date of publication of application: 08.03.2023
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: CAI, Yanfang, Shandong 266101 (CN); ZHANG, Ming, Shandong 266101 (CN); SUN, Mingming, Shandong 266101 (CN)
(74) Representative: Guardian IP Consulting I/S
(86) International application number: PCT/CN2021/078564
(87) International publication number: WO 2021/218349

(56) References cited:
- EP-A2- 2 169 320
- WO-A1-2007/123078
- CN-A- 104 913 443
- CN-A- 107 883 540
- CN-A- 109 140 712
- CN-A- 109 780 695
- CN-A- 110 469 909
- CN-U- 212 538 051
- JP-A- H1 054 576
- JP-A- H11 201 490
- JP-A- H11 337 153

## Description

### FIELD OF THE INVENTION

The present invention belongs to the technical field of air conditioning, and specifically relates to a control method for an air conditioner.

### BACKGROUND OF THE INVENTION

In an existing air conditioner placed at the bedside for use, an air outlet of the air conditioner is typically arranged toward the position of the bed during use. When the wind generated by the air conditioner blows out from the air outlet, it blows directly on the human body. In a case where the air conditioner is operating in a heating mode, people can quickly feel a heating effect when the wind blows directly on the human body, but in a case where the air conditioner is operating in a cooling mode, people's comfort will be reduced and even may get sick when the cold wind blows directly on the human body. For example, patent document EP-2169320-A2 discloses a control method for an air conditioner with an upper air guide plate and an upper swing blade arranged between an upper air outlet and a fan, and a lower air guide plate and a lower swing blade arranged between a lower air outlet and the fan, the method comprising acquiring an actual indoor temperature, comparing the actual indoor temperature with a user preset temperature, determining whether an actual working mode of the air conditioner is a heating mode or a cooling mode, and controlling the upper air guide plate, the upper swing blade, the lower air guide plate and the lower swing blade according to the actual working mode.

Accordingly, there is a need in the art for a new control method for an air conditioner to solve the above problem.

### SUMMARY OF THE INVENTION

In order to solve the above problem in the prior art, that is, to solve the problem in existing air conditioners that people can quickly feel a heating effect when the wind blows directly on the human body in a case where the air conditioner is operating in the heating mode, but people's comfort will be reduced and even may get sick when the cold wind blows directly on the human body in a case where the air conditioner is operating in the cooling mode, the present invention provides a control method for an air conditioner, in which an indoor heat exchanger and a fan are arranged in a housing of the air conditioner; an upper air outlet and a lower air outlet are arranged on a front side of the housing, an upper air guide plate and an upper swing blade are arranged between the upper air outlet and the fan, and a lower air guide plate and a lower swing blade are arranged between the lower air outlet and the fan; the upper air guide plate and the lower air guide plate are respectively provided with a plurality of air holes extending in their own thickness direction, and the control method for the air conditioner includes:
S1: acquiring an actual indoor temperature;
S2: comparing the actual indoor temperature with a user preset temperature;
S3: determining whether an actual working mode of the air conditioner is a heating mode or a cooling mode; and
S4: controlling the upper air guide plate, the upper swing blade, the lower air guide plate and the lower swing blade based on the actual working mode and a comparison result;
wherein the step of controlling the upper air guide plate, the upper swing blade, the lower air guide plate and the lower swing blade based on the actual working mode and the comparison result includes: in a case where the actual working mode is a heating mode, if the actual indoor temperature is lower than the user preset temperature and a temperature difference between the actual indoor temperature and the user preset temperature is larger than or equal to a preset first temperature difference threshold, then adjusting opening degrees of the upper air guide plate and the lower air guide plate to a first preset angle; and if the actual indoor temperature is higher than or equal to the user preset temperature, then adjusting the opening degrees of the upper air guide plate and the lower air guide plate to a second preset angle; and/or in a case where the actual working mode is a cooling mode, if the actual indoor temperature is higher than the user preset temperature and a temperature difference between the actual indoor temperature and the user preset temperature is larger than or equal to a preset second temperature difference threshold, then adjusting the opening degree of the upper air guide plate to a third preset angle, and at the same time, adjusting the opening degree of the lower air guide plate to a fourth preset angle; and if the actual indoor temperature is lower than or equal to the user preset temperature, then adjusting the opening degrees of both the upper air guide plate and the lower air guide plate to a fourth preset angle; in which the first preset angle is larger than the second preset angle, and the third preset angle is larger than the fourth preset angle;
wherein the step of controlling the upper air guide plate, the upper swing blade, the lower air guide plate and the lower swing blade based on the actual working mode and the comparison result includes: in a case where the actual working mode is a heating mode, if the actual indoor temperature is lower than the user preset temperature and a temperature difference between the actual indoor temperature and the user preset temperature is larger than or equal to a preset first temperature difference threshold, then controlling the upper swing blade to be consistent with a wind blowing direction of the upper air outlet, and controlling the lower swing blade to be consistent with a wind blowing direction of the lower air outlet; and/or in a case where the actual working mode is a heating mode, if the actual indoor temperature is higher than or equal to the user preset temperature, then controlling the upper swing blade and the lower swing blade to swing periodically;
wherein the step of controlling the upper air guide plate, the upper swing blade, the lower air guide plate and the lower swing blade based on the actual working mode and the comparison result includes: in a case where the actual working mode is a cooling mode, if the actual indoor temperature is higher than the user preset temperature and a temperature difference between the actual indoor temperature and the user preset temperature is larger than or equal to a preset second temperature difference threshold, then controlling the upper swing blade and the lower swing blade to swing periodically; and/or in a case where the actual working mode is a cooling mode, if the actual indoor temperature is lower than or equal to the user preset temperature, then controlling the upper swing blade to be consistent with a wind blowing direction of the upper air outlet, and controlling the lower swing blade to be consistent with a wind blowing direction of the lower air outlet.

As a preferred technical solution of the above control method for the air conditioner provided by the present invention, a refrigerant circulation loop is formed between the indoor heat exchanger and a compressor arranged outdoors, and when controlling the upper air guide plate, the upper swing blade, the lower air guide plate and the lower swing blade based on the actual working mode and the comparison result, the control method further includes: in a case where the actual working mode is a heating mode, if the actual indoor temperature is lower than the user preset temperature and a temperature difference between the actual indoor temperature and the user preset temperature is larger than or equal to a preset first temperature difference threshold, or in a case where the actual working mode is a cooling mode, if the actual indoor temperature is higher than the user preset temperature and a temperature difference between the actual indoor temperature and the user preset temperature is larger than or equal to a preset second temperature difference threshold, then controlling the compressor to run at a first preset power; and/or if the actual working mode is a heating mode and the actual indoor temperature is higher than or equal to the user preset temperature, or if the actual working mode is a cooling mode and the actual indoor temperature is lower than or equal to the user preset temperature, then controlling the compressor to run at a second preset power, the first preset power being larger than the second preset power.

As a preferred technical solution of the above control method for the air conditioner provided by the present invention, before controlling the upper air guide plate, the upper swing blade, the lower air guide plate and the lower swing blade based on the actual working mode and the comparison result, the control method further includes: calculating a temperature difference between the actual indoor temperature and the user preset temperature; acquiring a heating time for the temperature difference equal to a first temperature difference threshold to change until the actual indoor temperature is equal to the user preset temperature during first-time heating of the air conditioner; determining a change relationship of opening degrees of the upper air guide plate and/or the lower air guide plate with time according to a first preset angle and a second preset angle of the upper air guide plate and/or the lower air guide plate and the heating time; and adjusting the opening degrees of the upper air guide plate and/or the lower air guide plate during later heating according to the change relationship.

As a preferred technical solution of the above control method for the air conditioner provided by the present invention, the change relationship of the opening degrees of the upper air guide plate and/or the lower air guide plate with time is a linear relationship or is stepwise changing relationship.

As a preferred technical solution of the above control method for the air conditioner provided by the present invention, before controlling the upper air guide plate, the upper swing blade, the lower air guide plate and the lower swing blade based on the actual working mode and the comparison result, the control method further includes: calculating a temperature difference between the actual indoor temperature and the user preset temperature; and controlling opening degree of the upper air guide plate or the lower air guide plate according to a preset correspondence relationship between the opening degrees of the upper air guide plate and/or the lower air guide plate and the temperature difference.

As a preferred technical solution of the above control method for the air conditioner provided by the present invention, the first preset angle is a maximum opening angle of the upper air guide plate or the lower air guide plate; and/or the second preset angle and/or the third preset angle are 45°; and/or the fourth preset angle is an angle at which the upper air guide plate or the lower air guide plate is closed.

As a preferred technical solution of the above control method for the air conditioner provided by the present invention, the first temperature difference threshold and/or the second temperature difference threshold are 5°C; or the first temperature difference threshold and/or the second temperature difference threshold are any value from 3°C to 7°C.

In the control method for the air conditioner according to the present invention, based on whether the actual working mode of the air conditioner is the heating mode or the cooling mode and a result of comparing the actual indoor temperature with the user preset temperature, the upper air guide plate, the upper swing blade, the lower air guide plate and the lower swing blade of the air conditioner are controlled. Therefore, in the air conditioner of the present disclosure, a working state of the air conditioner can be automatically and timely adjusted according to the different heating mode and cooling mode of the actual working mode of the air conditioner, and the difference between the actual indoor temperature and the user preset temperature, so it is ensured that people can feel the heating effect quickly when the air conditioner is operating in the heating mode, and cold wind is also prevented from blowing directly on the human body when the air conditioner is operating in the cooling mode, so that the user's experience in use is always guaranteed.

In addition, in the control method for the air conditioner of the present invention, a change relationship of the opening degrees of the upper air guide plate and/or the lower air guide plate with time is determined according to the first preset angle and the second preset angle of the upper air guide plate and/or the lower air guide plate and the heating time for the temperature difference equal to the first temperature difference threshold to change until the actual indoor temperature is equal to the user preset temperature during first-time heating of the air conditioner, and the opening degrees of the upper air guide plate and/or the lower air guide plate during later heating are adjusted according to the change relationship. Therefore, in the heating process, the air conditioner realizes a gradual transition from focusing on the heating effect in the early stage of heating to focusing on the user experience in the later stage of heating, and realizes an optimal configuration between the heating effect and the user experience.

### BRIEF DESCRIPTION OF THE DRAWINGS

The air conditioner and the control method therefor of the present invention will be described below with reference to accompanying drawings in connection with a bedside air conditioner. In the drawings:
FIG. 1 is a schematic view showing an overall structure of the air conditioner of the present embodiment;
FIG. 2 is a schematic view showing a working state of the air conditioner of the present embodiment in a heating mode;
FIG. 3 is a schematic view showing the working state of the air conditioner of the present embodiment in a cooling mode;
FIG. 4 is a schematic view showing a connection structure of an upper swing blade with a first connecting rod of the present embodiment;
FIG. 5 is a schematic view showing a connection structure of a lower swing blade with a second connecting rod of the present embodiment;
FIG. 6 is a schematic structural view of the upper swing blade of the present embodiment;
FIG. 7 is a schematic structural view of the lower swing blade of the present embodiment;
FIG. 8 is a schematic structural view of an upper air guide plate of the present embodiment;
FIG. 9 is a schematic structural view of a lower air guide plate of the present embodiment;
FIG. 10 is a schematic structural view of a sterilization device of the present embodiment; and
FIG. 11 is a schematic flowchart of the control method for the air conditioner of the present embodiment.

### List of reference signs:

1: housing; 11: upper air inlet; 12: lower air inlet; 13: side air inlet; 14: upper air outlet; 15: lower air outlet;
2: indoor heat exchanger;
3: fan;
4: upper air guide plate;
5: upper swing blade; 51: second rotating shaft; 52: first hinge end; 53: first connecting rod;
6: lower air guide plate; 61: third rotating shaft;
7: lower swing blade; 71: fourth rotating shaft; 72: second hinge end; 73: second connecting rod;
8: sterilization device; 81: mounting seat; 82: ultraviolet lamp tube; 83: outer cover; 84: nano catalytic plate;
9: filter screen;
10: air hole.

### DETAILED DESCRIPTION OF THE EMBODIMENT(S) OF THE INVENTION

Preferred embodiments of the present invention will be described below with reference to the accompanying drawings. It should be understood by those skilled in the art that these embodiments are only used to explain the technical principles of the present invention, and are not intended to limit the scope of protection of the present invention which is defined by the appended independent claim. For example, although the first preset angle, the second preset angle, the third preset angle and the fourth preset angle of the upper air guide plate or the lower air guide plate are described with specific numerical values when illustrating the control method for the air conditioner of the present embodiment, these specific numerical values are not invariable, and those skilled in the art can adjust them as required to adapt to specific application scenes without departing from the scope of the present invention as defined by the appended independent claim.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "mount", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

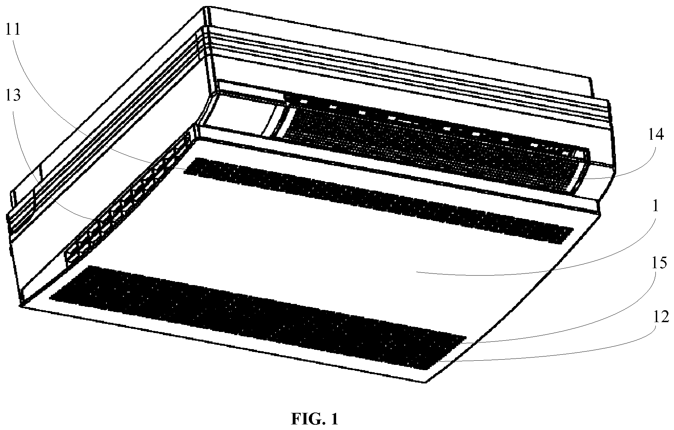

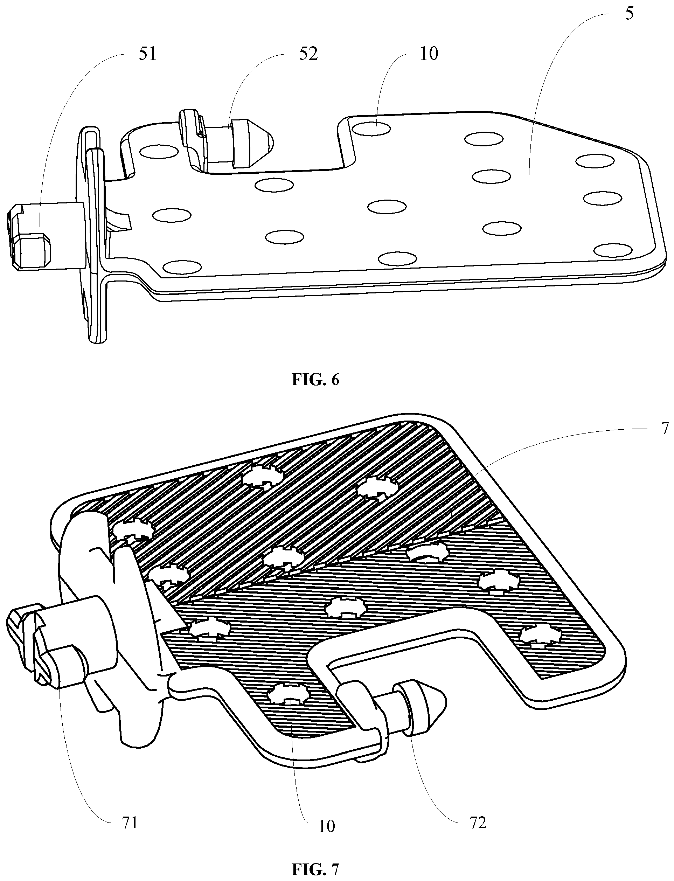

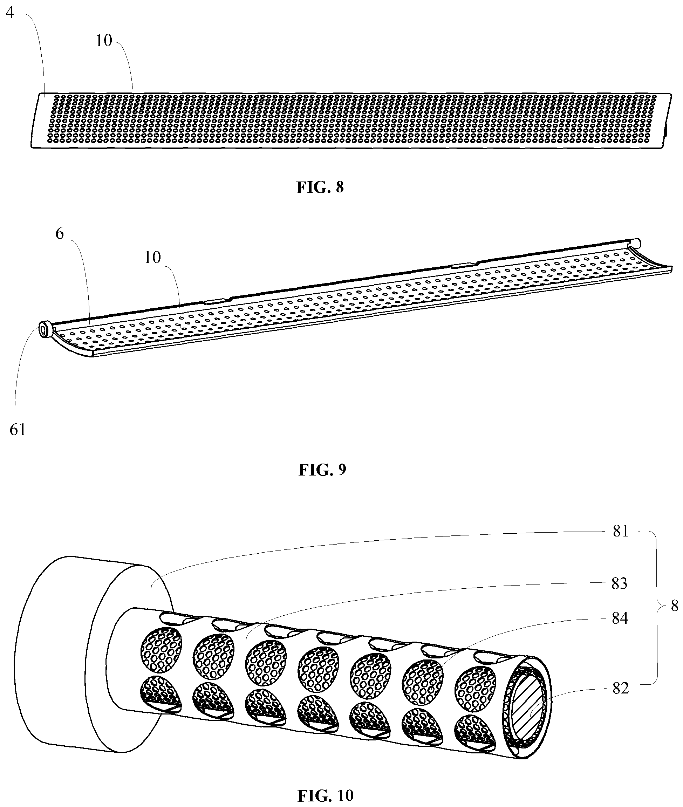

In order to solve the above problem in the prior art, that is, to solve the problem in existing air conditioners that people can quickly feel a heating effect only when the wind blows directly on the human body in a case where the air conditioner is operating in the heating mode, but people's comfort will be reduced and even may get sick when the cold wind blows directly on the human body in a case where the air conditioner is operating in the cooling mode, the present disclosure provides a new air conditioner. As shown in FIG. 1 to FIG. 3, the air conditioner includes a housing 1, as well as an indoor heat exchanger 2, a fan 3, an upper air guide plate 4 (as shown in FIG. 8), an upper swing blade 5 (as shown in FIG. 6), a lower air guide plate 6 (as shown in FIG. 9) and a lower swing blade 7 (as shown in FIG. 7) that are provided in the housing 1; the housing 1 is provided with an air inflow portion, an upper air outlet 14 and a lower air outlet 15, and the upper air outlet 14 and the lower air outlet 15 are both arranged on a front side of the housing 1.

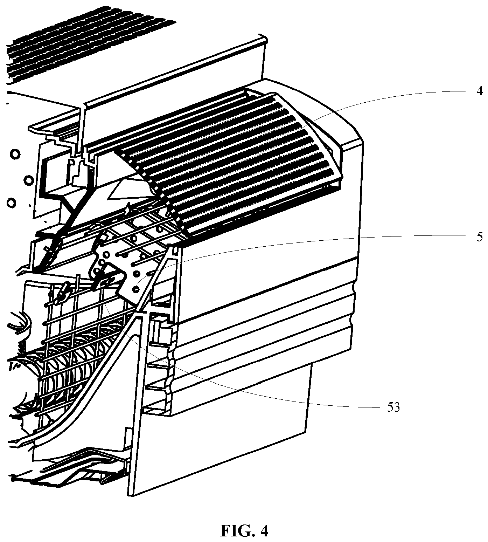

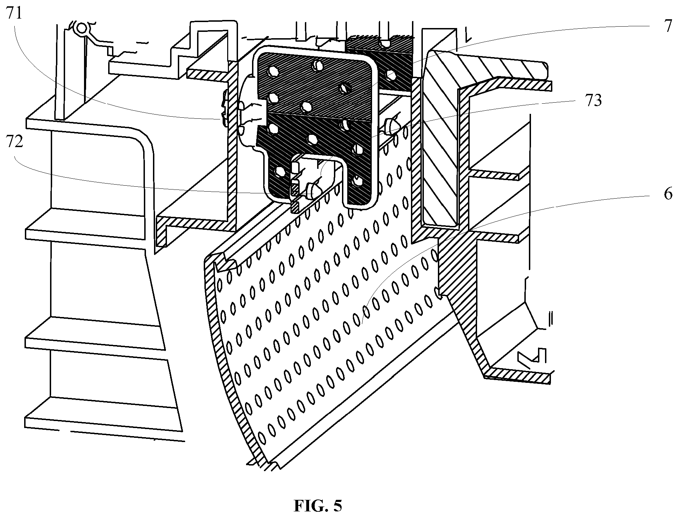

An upper air exhaust section is formed between the fan 3 and the upper air outlet 14, and a lower air exhaust section is formed between the fan 3 and the lower air outlet 15; the upper air guide plate 4 is rotatably connected to the upper air exhaust section through a first rotating shaft (not shown in the figure), and the upper air guide plate 4 rotates around the first rotating shaft to adjust an opening size of the upper air exhaust section; the upper swing blade 5 is arranged in the upper air exhaust section and is located between the fan 3 and the upper air guide plate 4; a second rotating shaft 51 of the upper swing blade 5 is rotatably connected to a skeleton in the housing 1, and a first hinge end 52 of the upper swing blade 5 is hinged with a first connecting rod 53 (as shown in FIG. 4); the first connecting rod 53 is perpendicular to the second rotating shaft 51, and the first connecting rod 53 drives the upper swing blade 5 to swing around the second rotating shaft 51 when the first connecting rod 53 performs a push-pull movement; as shown in FIG. 5, the lower air guide plate 6 is rotatably connected to the lower air exhaust section through a third rotating shaft 61, and the lower air guide plate 6 rotates around the third rotating shaft 61 to adjust an opening size of the lower air exhaust section; the lower swing blade 7 is arranged in the lower air exhaust section and is located between the lower air guide plate 6 and the lower air outlet 15; as shown in FIG. 5, a fourth rotating shaft 71 of the lower swing blade 7 is rotatably connected to the skeleton in the housing 1, and a second hinge end 72 of the lower swing blade 7 is hinged with a second connecting rod 73; the second connecting rod 73 is perpendicular to the fourth rotating shaft 71, and the second connecting rod 73 drives the lower swing blade 7 to swing around the fourth rotating shaft 71 when the second connecting rod 73 performs a push-pull movement; the air conditioner also includes a first motor (not shown in the figure) for driving the upper air guide plate 4 to rotate, a second motor (not shown in the figure) for driving the first connecting rod 53 to perform a push-pull movement, a third motor (not shown in the figure) for driving the lower air guide plate 6 to rotate, and a fourth motor (not shown in the figure) for driving the second connecting rod 73 to perform a push-pull movement.

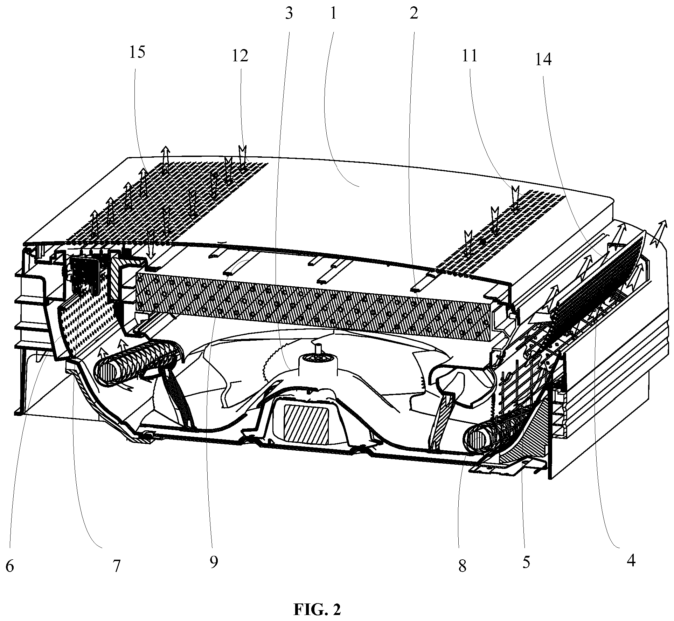

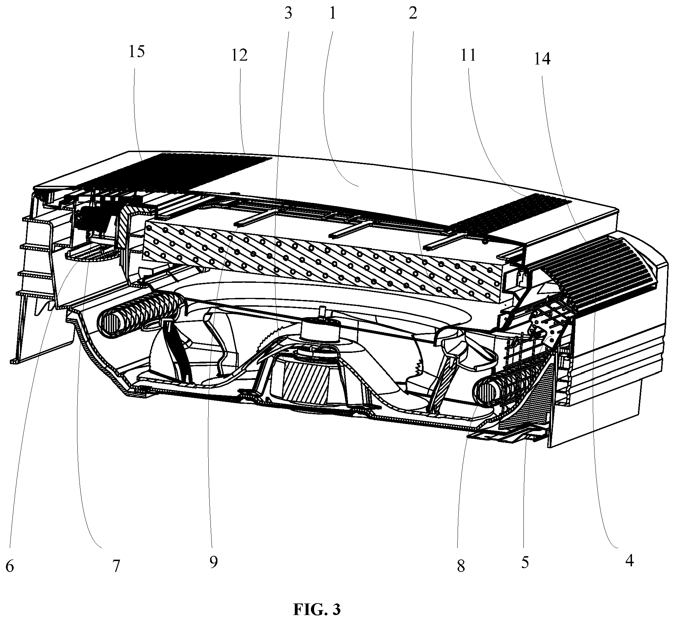

Exemplarily, as shown in FIG. 1, the air inflow portion provided on the housing 1 includes an upper air inlet 11 and a lower air inlet 12 arranged on the front side of the housing 1, and a side air inlet 13 arranged on a side face of the housing 1. It can be seen from FIG. 2 and FIG. 3 that the lower air inlet 12 and the lower air outlet 15 of the present embodiment adjoin to each other and share an air grille for supplying air to the room, but a partition is provided between the lower air exhaust section and an air inflow section inside the housing 1 to isolate the two. In addition, it can be understood that an air inlet may also be provided on a rear side or a top of the housing 1. The normal air introduction function of the air conditioner can be realized by merely arranging any one of the above air inlets on the housing 1.

In the air conditioner as shown in FIGS. 2 and 3, the wind in the upper air exhaust section first changes a wind direction thereof through the swinging of the upper swing blade 5, then a main wind direction is determined by the upper air guide plate 4; the upper air guide plate 4 can also adjust the air volume by adjusting an opening angle. Since the blowing wind passes through the upper air guide plate 4, the upper air guide plate 4 can be directly arranged at the upper air outlet 14.

The air volume of the wind in the lower air exhaust section is first adjusted by the lower air guide plate 6, and then the wind direction thereof is changed through the swinging of the lower swing blade 7. Since the blowing wind of the lower air outlet 15 is adjusted through the swinging of the lower swing blade 7 afterward, compared with the upper air outlet 14, the wind blowing from the lower air outlet 15 is gentler. The upper swing blade 5 and the lower swing blade 7 provided with the air holes 10 divide the blowing wind into two categories: one of which flows along their surfaces and the other of which flows along their own air holes 10 to achieve the purpose of changing the wind direction. At the same time, on one hand, the upper swing blade 5 and the lower swing blade 7 can change the wind direction by simply adjusting the angle of the swing blade, and on the other hand, the upper swing blade 5 and the lower swing blade 7 can also constantly change the wind direction by periodically swinging.

As shown in FIG. 6 to FIG. 9, the upper air guide plate 4, the upper swing blade 5, the lower air guide plate 6 and the lower swing blade 7 are each provided with a plurality of air holes 10 extending along their own thickness direction, so that when the air flows in the upper air exhaust section and lower air exhaust section of the air conditioner and blows into the room through the upper air outlet 14 and the lower air outlet 15, different directions of airflows are formed, so that the blowing wind is gentler and is prevented from blowing directly on the human body.

As shown in FIGS. 2 and 3, the first rotating shaft of the upper air guide plate 4 is perpendicular to the second rotating shaft 51 of the upper swing blade 5, so that a rotation direction of the upper air guide plate 4 also intersects the swinging direction of the upper swing blade 5, thus enabling the wind blowing from the upper air outlet 14 to be gentler by changing the wind direction for many times; the third rotating shaft 61 of the lower air guide plate 6 is perpendicular to the fourth rotating shaft 71 of the lower swing blade 7, so that a rotation direction of the lower air guide plate 6 also intersects the swinging direction of the lower swing blade 7, thus enabling the wind blowing from the lower air outlet 15 to be gentler by changing the wind direction for many times.

In the air conditioner as shown in FIGS. 2 and 3, the indoor heat exchanger 2 in the present embodiment is a fin type heat exchanger, and the indoor heat exchanger 2 is arranged on an air inflow side of the fan 3; the air conditioner in the present embodiment further includes a filter screen 9 arranged inside the housing 1, and the filter screen 9 is located between the air inflow portion and the indoor heat exchanger 2. Only a fixing frame for mounting the filter screen 9 is shown in FIG. 2 and FIG. 3, so that the filter screen 9 can be described exemplarily. When the air conditioner is working, indoor wind enters the interior of the air conditioner from the air inflow portion, passes through the filter screen 9, the indoor heat exchanger 2 and the fan 3 in sequence, and then enters the upper air exhaust section and the lower air exhaust section respectively.

The first motor, the second motor, the third motor and the fourth motor in the air conditioner of the present embodiment can be communicatively connected with a signal output terminal of a controller in the air conditioner, and a signal input terminal of the controller can be communicatively connected with a temperature sensor configured to monitor an actual indoor temperature. The controller automatically controls the upper air guide plate 4, the upper swing blade 5, the lower air guide plate 6 and the lower swing blade 7 according to a comparison result of the actual indoor temperature and a user preset temperature fed back by the temperature sensor and the working mode of the air conditioner, so that the user's experience in use in the heating mode and the cooling mode can be further improved.

FIG. 2 is a schematic view showing a working state of the air conditioner of the present embodiment in the heating mode, in which the upper air guide plate 4 and the lower air guide plate 6 are both in an open state; moreover, the upper swing blade 5 is consistent with the wind direction of the upper air outlet 14, and the lower swing blade 7 is consistent with the wind direction of the lower air outlet 15. FIG. 3 is a schematic view showing the working state of the air conditioner of the present embodiment in the cooling mode, in which the upper air guide plate 4 is opened by a certain angle, whereas the lower air guide plate 6 is in a closed state, and both the upper swing blade 5 and the lower swing blade 7 swing periodically.

In an air conditioner provided by the present embodiment, the upper air outlet 14 and the lower air outlet 15 are provided on the front side of housing 1, the upper air guide plate 4 and the upper swing blade 5 are provided between the upper air outlet 14 and the fan 3, and the lower air guide plate 6 and the lower swing blade 7 are provided between the lower air outlet 15 and the fan 3. In this way, the air conditioner can open the angles of the upper air guide plate 4 and the lower air guide plate 6 to the maximum in an initial stage of heating, and at the same time can control the upper swing blade 5 to be consistent with the wind direction of the upper air outlet 14, and the lower swing blade 7 to be consistent with the wind direction of the lower air outlet 15, so that people can quickly feel the heating effect; the air conditioner can also open the upper air guide plate 4 to a preset angle (such as 45°) in an early stage of cooling, close the lower air guide plate 6, and at the same time can control the upper swing blade 5 and the lower swing blade 7 to swing periodically to prevent the cold wind from blowing directly on the human body. Therefore, the air conditioner can ensure the user's experience in use in both the heating mode and the cooling mode.

Generally, in the air conditioner, bacteria in the air are killed by an ultraviolet light sterilization device. However, since the wind in the conventional air conditioner generally blows directly, the time that the ultraviolet light sterilization device sterilizes the bacteria in the wind is short, thus failing to sufficiently kill the bacteria in the wind blowing into the room. In addition, ozone generated when the general ultraviolet light sterilization device utilizes C-wave ultraviolet light for sterilization will also have an adverse effect on human health.

In order to solve the above problems, as shown in FIGS. 2 and 3, the air conditioner of the present embodiment is also provided with a sterilization device 8 in the upper air exhaust section and the lower air exhaust section respectively. Exemplarily, as shown in FIG. 10, the sterilization device 8 includes a mounting seat 81, an ultraviolet lamp tube 82 and an outer cover 83 that are connected to the mounting seat 81. The outer cover 83 is sleeved over the outside of the ultraviolet lamp tube 82, and a nano catalytic plate 84 is provided on the outer cover 83.

The ultraviolet light emitted from the ultraviolet lamp tube 82 of the sterilization device 8 itself of the present embodiment contacts with the nano catalytic plate 84 to obtain hydroxyl radicals to kill the bacteria in the air; through the periodic swinging of the upper swing blade 5 or the lower swing blade 7, the air can fully mix with the hydroxyl radicals to enhance the sterilizing effect. The hydroxyl radicals will oxidize bacteria, viruses and other harmful substances in the air into water and carbon dioxide without generation of ozone. In addition to killing microorganisms (bacteria, viruses, etc.), the hydroxyl radicals can also decompose harmful gases, volatile organic compounds such as formaldehyde and benzene, smoke smell and fine 0.01µm airborne particles due to their super strong oxidizing ability. The sterilization device 8 of the present embodiment can not only purify the air inside the air conditioner, but also release purification factors (hydroxyl radicals and superoxide radicals) to every corner of the room with the wind, actively capture and purify bacteria, viruses and harmful gases.

In addition, in the air conditioner of the present embodiment, a titanium oxide coating may also be provided on outer surfaces of the upper air guide plate 4, the upper swing blade 5, the lower air guide plate 6 and the lower swing blade 7; the outer cover 83 is provided with light-transmitting holes (not shown in the figure) for the ultraviolet light to exit and irradiate the titanium oxide coating. In this way, the ultraviolet light emitted from the light-transmitting holes can also contact with the titanium oxide coating provided on the outer surfaces of the upper air guide plate 4, the upper swing blade 5, the lower air guide plate 6 and the lower swing blade 7 to generate hydroxyl radicals, so as to further enhance the sterilizing effect.

Of course, the above alternative implementations, as well as the alternative implementations and preferred implementations, can also be used in cooperation with each other, so as to obtain new implementations suitable for more specific application scenes through combination.

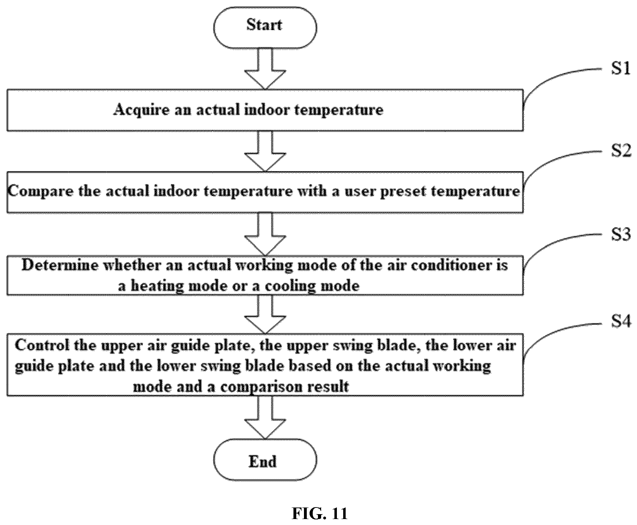

Then, in the control method for the air conditioner provided by the present embodiment, as shown in FIGS. 2 and 3, an indoor heat exchanger 2 and a fan 3 are arranged in a housing 1 of the air conditioner, an upper air outlet 14 and a lower air outlet 15 are arranged on a front side of the housing 1, an upper air guide plate 4 and an upper swing blade 5 are arranged between the upper air outlet 14 and the fan 3, and a lower air guide plate 6 and a lower swing blade 7 are arranged between the lower air outlet 15 and the fan 3; the upper air guide plate 4 and the lower air guide plate 6 are respectively provided with a plurality of air holes 10 extending in their own thickness direction; as shown in FIG. 11, the control method for the air conditioner includes:
S1: acquiring an actual indoor temperature;
S2: comparing the actual indoor temperature with a user preset temperature;
S3: determining whether an actual working mode of the air conditioner is a heating mode or a cooling mode; and
S4: controlling the upper air guide plate 4, the upper swing blade 5, the lower air guide plate 6 and the lower swing blade 7 based on the actual working mode and a comparison result.

It should be noted that the necessary descriptions of the relevant structure of the air conditioner are given herein all for the purpose of clearly and completely explaining the control method for the air conditioner of the present embodiment. For a more detailed description of the structure of the air conditioner, reference may be made to the foregoing description of the present embodiment, and a repeated description will be omitted herein. However, it should also be understood by those skilled in the art that the foregoing description of the specific structure of the air conditioner cannot be used as an improper limitation to the scope of application of the control method for the air conditioner provided by the present embodiment. In addition to the above air conditioner, the present disclosure may also be applied to other similar air conditioners, which may be a bedside air conditioner or other air conditioners such as a cabinet air conditioner.

In the control method for the air conditioner according to the present embodiment, based on whether the actual working mode of the air conditioner is the heating mode or the cooling mode and a result of comparing the actual indoor temperature with the user preset temperature, the upper air guide plate 4, the upper swing blade 5, the lower air guide plate 6 and the lower swing blade 7 of the air conditioner are controlled. Therefore, in the air conditioner of the present embodiment, a working state of the air conditioner can be automatically and timely adjusted according to the different heating mode and cooling mode of the actual working mode of the air conditioner, and the difference between the actual indoor temperature and the user preset temperature, so it is ensured that people can quickly feel the heating effect when the air conditioner is operating in the heating mode, and cold wind is also prevented from blowing directly on the human body when the air conditioner is operating in the cooling mode, so that the user's experience in use is always guaranteed.

It should be noted that although the specific steps of the method of the present disclosure have been described above in detail, those skilled in the art can combine, split the above steps and exchange the order thereof without departing from the basic principle of the present disclosure. The thus-modified technical solutions do not change the basic idea of the present disclosure, and therefore also fall within the scope of protection of the present disclosure. For example, in addition to being executed after steps S1 and S2, step S3 may also be executed simultaneously with steps S1 or S2, or executed before steps S1 and S2.

As a preferred implementation of the above control method for the air conditioner provided by the present embodiment, the step of controlling the upper air guide plate 4, the upper swing blade 5, the lower air guide plate 6 and the lower swing blade 7 based on the actual working mode and the comparison result in step S4 includes:
(I) in a case where the actual working mode is a heating mode:
   1) if the actual indoor temperature is lower than the user preset temperature and a temperature difference between the actual indoor temperature and the user preset temperature is larger than or equal to a preset first temperature difference threshold, then adjusting opening degrees of the upper air guide plate 4 and the lower air guide plate 6 to a first preset angle.

Exemplarily, in this case, the actual indoor temperature is much lower than the user preset temperature, and it is urgently necessary to increase the indoor temperature to meet the user's requirement on the indoor temperature. Therefore, the upper air guide plate 4 or the lower air guide plate 6 may be adjusted to the maximum opening angle. The first preset angle may be set as the maximum opening angle, or other angles set for quick heating. The first temperature difference threshold may be set to 5°C, or in a specific implementation, the first temperature difference threshold may be set to any value from 3°C to 7°C.

Further, at this time, the upper swing blade 5 can be controlled to be consistent with a wind direction of the upper air outlet 14, and the lower swing blade 7 can be controlled to be consistent with a wind direction of the lower air outlet 15. In this way, the upper swing blade 5 and the lower swing blade 7 can cooperate with the upper air guide plate 4 and the lower air guide plate 6 to jointly ensure the maximum air volume during heating.

2) if the actual indoor temperature is higher than or equal to the user preset temperature, then adjusting the opening degrees of the upper air guide plate 4 and the lower air guide plate 6 to a second preset angle; in which the first preset angle is larger than the second preset angle.

Exemplarily, in this case, the main function of the air conditioner is to keep the indoor temperature, and at the same time to ensure the user's experience in use. At this time, it is necessary to reduce the opening degrees of the upper air guide plate 4 and the lower air guide plate 6 from the first preset angle to the second preset angle, and the second preset angle is an angle at which the wind will not blow directly on the human body and at the same time the indoor temperature can also be effectively kept. For example, the second preset angle may be 45°.

Further, at this time, the upper swing blade 5 and the lower swing blade 7 can be controlled to swing periodically, so as to cooperate with the upper air guide plate 4 and the lower air guide plate 6, and make the hot wind blowing from the upper air outlet 14 and the lower air outlet 15 gentler, thus ensuring the user's experience in use.
(II) in a case where the actual working mode is a cooling mode:
1) if the actual indoor temperature is higher than the user preset temperature and a temperature difference between the actual indoor temperature and the user preset temperature is larger than or equal to a preset second temperature difference threshold, then adjusting the opening degree of the upper air guide plate 4 to a third preset angle, and at the same time, adjusting the opening degree of the lower air guide plate 6 to a fourth preset angle; in which the third preset angle is larger than the fourth preset angle.

Exemplarily, in this case, the actual indoor temperature is much higher than the user preset temperature, and it is necessary to quickly reduce the indoor temperature to the user preset temperature. Since a lower exhaust port of the air conditioner is within the height range of the bed (or the user), and the height of an upper exhaust port of the air conditioner is much higher than the height of the bed (or the user), in order to reduce the indoor temperature to the user preset temperature as soon as possible and reduce or prevent the cold wind from blowing directly on the human body, the fourth preset angle should be set smaller than the third preset angle. For example, the fourth preset angle is set to close the lower air guide plate 6, and the third preset angle may be set to 45°, so as to greatly reduce or prevent the cold wind from blowing directly on the human body. In addition, the second temperature difference threshold may be set to 5°C; or in a further implementation, the second temperature difference threshold may be set to any value from 3°C to 7°C, and the magnitudes of the first temperature difference threshold and the second temperature difference threshold may be the same or may also be different.

Further, at this time, the upper swing blade 5 and the lower swing blade 7 can be controlled to swing periodically, so as to cooperate with the upper air guide plate 4 and the lower air guide plate 6, so that the cold wind blowing from the upper air outlet 14 and the lower air outlet 15 can be made gentler more effectively, thus improving the user's experience in use.

2) if the actual indoor temperature is lower than or equal to the user preset temperature, then adjusting the opening degrees of both the upper air guide plate 4 and the lower air guide plate 6 to a fourth preset angle. The fourth preset angle may be set to close the upper air guide plate 4 or the lower air guide plate 6.

Exemplarily, in this case, the main function of the air conditioner is to keep the indoor temperature, and at the same time to ensure the user's experience in use. Since the upper air guide plate 4 and the lower air guide plate 6 in the present embodiment are respectively provided with a plurality of air holes 10 extending along their own thickness direction, when the upper air guide plate 4 and the lower air guide plate 6 are closed, the volume of wind blowing from the upper air outlet 14 and the lower air outlet 15 can be reduced, and the blowing cold wind can be gentler. The fourth preset angle is an angle at which the upper air guide plate 4 or the lower air guide plate 6 is closed.

Further, at this time, the upper swing blade 5 can be controlled to be consistent with the wind direction of the upper air outlet 14, and the lower swing blade 7 can be controlled to be consistent with the wind direction of the lower air outlet 15, so as to cooperate with the upper air guide plate 4 and the lower air guide plate 6 to ensure an effective cooling effect and at the same time give considerations to the user's experience in use.

As a preferred implementation of the above control method for the air conditioner provided by the present embodiment, a refrigerant circulation loop is formed between the indoor heat exchanger 2 and a compressor arranged outdoors (not shown in the figure), and when controlling the upper air guide plate 4, the upper swing blade 5, the lower air guide plate 6 and the lower swing blade 7 based on the actual working mode and the comparison result in step S4, the control method further includes:
1) in a case where the actual working mode is a heating mode, if the actual indoor temperature is lower than the user preset temperature and a temperature difference between the actual indoor temperature and the user preset temperature is larger than or equal to a preset first temperature difference threshold, or in a case where the actual working mode is a cooling mode, if the actual indoor temperature is higher than the user preset temperature and a temperature difference between the actual indoor temperature and the user preset temperature is larger than or equal to a preset second temperature difference threshold, then controlling the compressor to run at a first preset power. In this way, a higher cooling or heating effect of the air conditioner is ensured at this time.
2) if the actual working mode is a heating mode and the actual indoor temperature is higher than or equal to the user preset temperature, or if the actual working mode is a cooling mode and the actual indoor temperature is lower than or equal to the user preset temperature, then controlling the compressor to run at a second preset power. In this case, the compressor is reduced from the first preset power to the second preset power, so that at the same time of keeping the indoor temperature, the user's experience in use can also be ensured and electric energy can be saved. The first preset power is larger than the second preset power.

Exemplarily, in the control method for the air conditioner of the present embodiment, according to the different heating mode and cooling mode of the actual working mode of the air conditioner and the difference between the actual indoor temperature and the user preset temperature, the air conditioner of the present embodiment controls the upper air guide plate 4, the upper swing blade 5, the lower air guide plate 6, the lower swing blade 7 and the compressor of the air conditioner, and adjusts a working state of the air conditioner automatically and timely. Therefore, it is ensured that people can quickly feel the heating effect when the air conditioner is operating in the heating mode, and cold wind is also prevented from blowing directly on the human body when the air conditioner is operating in the cooling mode, so that the user's experience in use is always guaranteed, and at the same time the air conditioner can be more power-saving.

As a preferred implementation of the above control method for the air conditioner provided by the present embodiment, before controlling the upper air guide plate 4, the upper swing blade 5, the lower air guide plate 6 and the lower swing blade 7 based on the actual working mode and the comparison result in step S4, the control method further includes: calculating a temperature difference between the actual indoor temperature and the user preset temperature; acquiring a heating time for the temperature difference equal to a first temperature difference threshold to change until the actual indoor temperature is equal to the user preset temperature during first-time heating of the air conditioner; determining a change relationship of the opening degrees of the upper air guide plate 4 and/or the lower air guide plate 6 with time according to a first preset angle and a second preset angle of the upper air guide plate 4 and/or the lower air guide plate 6 and the heating time; and adjusting the opening degrees of the upper air guide plate 4 and/or the lower air guide plate 6 during later heating according to the change relationship.

Exemplarily, when the size of the indoor space is fixed, the time for the same air conditioner to adjust the indoor temperature from a certain temperature to another temperature is basically unchanged. As the actual indoor temperature approaches the user preset temperature, the opening degrees of the upper air guide plate 4 and the lower air guide plate 6 are gradually reduced from the first preset angle to the second preset angle. The change relationship of the opening degrees of the upper air guide plate 4 and/or the lower air guide plate 6 with time may be a linear relationship or a stepwise changing relationship.

When adjusting the opening degrees of the upper air guide plate 4 and/or the lower air guide plate 6 during later heating according to the change relationship, in the heating process, the air conditioner realizes a gradual transition from focusing on the heating effect in the early stage of heating to focusing on the user experience in the later stage of heating, and realizes an optimal configuration between the heating effect and the user experience. Of course, it can be understood by those skilled in the art that the same method can also be used to adjust the opening degrees of the upper air guide plate 4 and/or the lower air guide plate 6 of the air conditioner in the cooling mode.

As another preferred implementation of the above control method for the air conditioner provided by the present embodiment, before controlling the upper air guide plate 4, the upper swing blade 5, the lower air guide plate 5 and the lower swing blade 7 based on the actual working mode and the comparison result in step S4, the control method further includes: calculating a temperature difference between the actual indoor temperature and the user preset temperature; and controlling the opening degree of the upper air guide plate 4 or the lower air guide plate 6 according to a preset correspondence relationship between the opening degrees of the upper air guide plate 4 and/or the lower air guide plate 6 and the temperature difference. Using this method, a gradual transition from focusing on the heating effect in the early stage of heating to focusing on the user experience in the later stage of heating of the air conditioner in the heating process can also be realized, so as to realize an optimal configuration between the heating effect and the user experience.

It should be understood by those skilled in the art that the control method for the air conditioner provided by the present embodiment may be stored as a program in a computer-readable storage medium. The storage medium includes several instructions for causing a computer device (which may be a personal computer, a server, or a network device, etc.) or a processor to execute some steps of the methods of various embodiments of the present disclosure. The above storage medium includes: a U disk, a mobile hard disk, a read-only memory (ROM), a random access memory (RAM), a magnetic disk or an optical disk and other media that can store program codes.

Hitherto, the technical solutions of the present invention have been the in connection with the preferred embodiments shown in the accompanying drawings, but it is easily understood by those skilled in the art that the scope of protection of the present invention is obviously not limited to these specific embodiments. Without departing from the scope of the present invention as defined by the independent claim, those skilled in the art can make equivalent changes or replacements to relevant technical features, and all the technical solutions after these changes or replacements will fall within the scope of protection of the present invention.

## Claims

1. A control method for an air conditioner, wherein an indoor heat exchanger and a fan are arranged in a housing of the air conditioner; an upper air outlet and a lower air outlet are arranged on a front side of the housing, an upper air guide plate and an upper swing blade are arranged between the upper air outlet and the fan, and a lower air guide plate and a lower swing blade are arranged between the lower air outlet and the fan; the upper air guide plate and the lower air guide plate are respectively provided with a plurality of air holes extending in their own thickness direction, the control method comprising:
acquiring (S1) an actual indoor temperature;
comparing (S2) the actual indoor temperature with a user preset temperature;
determining (S3) whether an actual working mode of the air conditioner is a heating mode or a cooling mode; and the control method being **characterized in** further comprising:
controlling (S4) the upper air guide plate, the upper swing blade, the lower air guide plate and the lower swing blade based on the actual working mode and a comparison result;
wherein the step of controlling the upper air guide plate, the upper swing blade, the lower air guide plate and the lower swing blade based on the actual working mode and the comparison result comprises:
in a case where the actual working mode is a heating mode, if the actual indoor temperature is lower than the user preset temperature and a temperature difference between the actual indoor temperature and the user preset temperature is larger than or equal to a preset first temperature difference threshold, then adjusting opening degrees of the upper air guide plate and the lower air guide plate to a first preset angle; and if the actual indoor temperature is higher than or equal to the user preset temperature, then adjusting the opening degrees of the upper air guide plate and the lower air guide plate to a second preset angle; and/or
in a case where the actual working mode is a cooling mode, if the actual indoor temperature is higher than the user preset temperature and a temperature difference between the actual indoor temperature and the user preset temperature is larger than or equal to a preset second temperature difference threshold, then adjusting the opening degree of the upper air guide plate to a third preset angle, and at the same time, adjusting the opening degree of the lower air guide plate to a fourth preset angle; and if the actual indoor temperature is lower than or equal to the user preset temperature, then adjusting the opening degrees of both the upper air guide plate and the lower air guide plate to a fourth preset angle;
wherein the first preset angle is larger than the second preset angle, and the third preset angle is larger than the fourth preset angle;
wherein the step of controlling the upper air guide plate, the upper swing blade, the lower air guide plate and the lower swing blade based on the actual working mode and the comparison result comprises:
in a case where the actual working mode is a heating mode, if the actual indoor temperature is lower than the user preset temperature and a temperature difference between the actual indoor temperature and the user preset temperature is larger than or equal to a preset first temperature difference threshold, then controlling the upper swing blade to be consistent with a wind blowing direction of the upper air outlet, and controlling the lower swing blade to be consistent with a wind blowing direction of the lower air outlet; and/or
in a case where the actual working mode is a heating mode, if the actual indoor temperature is higher than or equal to the user preset temperature, then controlling the upper swing blade and the lower swing blade to swing periodically;
wherein the step of controlling the upper air guide plate, the upper swing blade, the lower air guide plate and the lower swing blade based on the actual working mode and the comparison result comprises:
in a case where the actual working mode is a cooling mode, if the actual indoor temperature is higher than the user preset temperature and a temperature difference between the actual indoor temperature and the user preset temperature is larger than or equal to a preset second temperature difference threshold, then controlling the upper swing blade and the lower swing blade to swing periodically; and/or
in a case where the actual working mode is a cooling mode, if the actual indoor temperature is lower than or equal to the user preset temperature, then controlling the upper swing blade to be consistent with a wind blowing direction of the upper air outlet, and controlling the lower swing blade to be consistent with a wind blowing direction of the lower air outlet.

2. The control method according to claim 1, wherein a refrigerant circulation loop is formed between the indoor heat exchanger and a compressor arranged outdoors, and when controlling the upper air guide plate, the upper swing blade, the lower air guide plate and the lower swing blade based on the actual working mode and the comparison result, the control method further comprises:
in a case where the actual working mode is a heating mode, if the actual indoor temperature is lower than the user preset temperature and a temperature difference between the actual indoor temperature and the user preset temperature is larger than or equal to a preset first temperature difference threshold, or in a case where the actual working mode is a cooling mode, if the actual indoor temperature is higher than the user preset temperature and a temperature difference between the actual indoor temperature and the user preset temperature is larger than or equal to a preset second temperature difference threshold, then controlling the compressor to run at a first preset power; and/or
if the actual working mode is a heating mode and the actual indoor temperature is higher than or equal to the user preset temperature, or if the actual working mode is a cooling mode and the actual indoor temperature is lower than or equal to the user preset temperature, then controlling the compressor to run at a second preset power;
wherein the first preset power is larger than the second preset power.

3. The control method according to claim 1, wherein before controlling the upper air guide plate, the upper swing blade, the lower air guide plate and the lower swing blade based on the actual working mode and the comparison result, the control method further comprises:
calculating a temperature difference between the actual indoor temperature and the user preset temperature;
acquiring a heating time for the temperature difference equal to a first temperature difference threshold to change until the actual indoor temperature is equal to the user preset temperature during first-time heating of the air conditioner;
determining a change relationship of opening degrees of the upper air guide plate and/or the lower air guide plate with time according to a first preset angle and a second preset angle of the upper air guide plate and/or the lower air guide plate and the heating time; and
adjusting the opening degrees of the upper air guide plate and/or the lower air guide plate during later heating according to the change relationship.

4. The control method according to claim 3, wherein the change relationship of the opening degrees of the upper air guide plate and/or the lower air guide plate with time is a linear relationship or is stepwise changing relationship.

5. The control method according to claim 1, wherein before controlling the upper air guide plate, the upper swing blade, the lower air guide plate and the lower swing blade based on the actual working mode and the comparison result, the control method further comprises:
calculating a temperature difference between the actual indoor temperature and the user preset temperature; and
controlling opening degree of the upper air guide plate or the lower air guide plate according to a preset correspondence relationship between the opening degrees of the upper air guide plate and/or the lower air guide plate and the temperature difference.

6. The control method according to claim 1, wherein the first preset angle is a maximum opening angle of the upper air guide plate or the lower air guide plate; and/or
the second preset angle and/or the third preset angle are 45°; and/or
the fourth preset angle is an angle at which the upper air guide plate or the lower air guide plate is closed.

7. The control method according to claim 1, wherein the first temperature difference threshold and/or the second temperature difference threshold are 5°C; or
the first temperature difference threshold and/or the second temperature difference threshold are any value from 3°C to 7°C.

## Patentansprüche

1. Eine Steuerungsmethode für eine Klimaanlage, wobei ein Innenwärmetauscher und ein Lüfter in einem Gehäuse der Klimaanlage angeordnet sind; eine obere Luftauslassöffnung und eine untere Luftauslassöffnung sind auf einer vorderen Seite des Gehäuses angeordnet, eine obere Luftleitplatte und eine obere Schwenkschicht sind zwischen der oberen Luftauslassöffnung und dem Lüfter angeordnet, und eine untere Luftleitplatte und eine untere Schwenkschicht sind zwischen der unteren Luftauslassöffnung und dem Lüfter angeordnet; die obere Luftleitplatte und die untere Luftleitplatte sind jeweils mit einer Vielzahl von Luftlöchern ausgestattet, die in ihrer eigenen Dickenrichtung verlaufen, wobei die Steuerungsmethode Folgendes umfasst:
die tatsächliche Innentemperatur (S1) erfassen;
das tatsächliche Innentemperatur mit einer vom Benutzer voreingestellten Temperatur vergleichen (S2);
bestimmen (S3), ob der tatsächliche Betriebsmodus der Klimaanlage ein Heizmodus oder ein Kühlmodus ist; und die Steuerungsmethode ist **dadurch gekennzeichnet, dass** sie weiterhin umfasst:
das obere Luftführblech, das obere Schwingblatt, das untere Luftführblech und das untere Schwingblatt basierend auf dem tatsächlichen Arbeitsmodus und einem Vergleichsergebnis steuern (S4);
wobei der Schritt, die obere Luftführplatte, die obere Schwingblende, die untere Luftführplatte und die untere Schwingblende basierend auf dem tatsächlichen Arbeitsmodus und dem Vergleichsergebnis zu steuern, umfasst:
in einem Fall, in dem der tatsächliche Betriebsmodus ein Heizmodus ist, wenn die tatsächliche Raumtemperatur niedriger als die vom Benutzer voreingestellte Temperatur ist und der Temperaturunterschied zwischen der tatsächlichen Raumtemperatur und der vom Benutzer voreingestellten Temperatur größer oder gleich einem voreingestellten ersten Temperaturdifferenzschwellenwert ist, dann die Öffnungsgrade der oberen Luftleitplatte und der unteren Luftleitplatte auf einen ersten voreingestellten Winkel einstellen; und wenn die tatsächliche Raumtemperatur höher oder gleich der vom Benutzer voreingestellten Temperatur ist, dann die Öffnungsgrade der oberen Luftleitplatte und der unteren Luftleitplatte auf einen zweiten voreingestellten Winkel einstellen; und/oder
Falls der tatsächliche Betriebsmodus ein Kühlmodus ist, wenn die tatsächliche Raumtemperatur höher ist als die vom Benutzer voreingestellte Temperatur und der Temperaturunterschied zwischen der tatsächlichen Raumtemperatur und der vom Benutzer voreingestellten Temperatur größer oder gleich einem voreingestellten zweiten Temperaturunterschiedsschwellenwert ist, dann wird der Öffnungswinkel der oberen Luftleitplatte auf einen dritten voreingestellten Winkel eingestellt, und gleichzeitig wird der Öffnungswinkel der unteren Luftleitplatte auf einen vierten voreingestellten Winkel eingestellt; und falls die tatsächliche Raumtemperatur niedriger oder gleich der vom Benutzer voreingestellten Temperatur ist, dann werden die Öffnungswinkel der oberen und unteren Luftleitplatte auf einen vierten voreingestellten Winkel eingestellt;
wobei der erste voreingestellte Winkel größer als der zweite voreingestellte Winkel ist und der dritte voreingestellte Winkel größer als der vierte voreingestellte Winkel ist;
wobei der Schritt, die obere Luftleitplatte, die obere Schwingblende, die untere Luftleitplatte und die untere Schwingblende basierend auf dem tatsächlichen Arbeitsmodus und dem Vergleichsergebnis zu steuern, umfasst:
Falls der tatsächliche Betriebsmodus ein Heizmodus ist, die tatsächliche Raumtemperatur niedriger als die vom Benutzer voreingestellte Temperatur ist und die Temperaturdifferenz zwischen der tatsächlichen Raumtemperatur und der vom Benutzer voreingestellten Temperatur größer oder gleich einer voreingestellten ersten Temperaturdifferenzschwelle ist, dann wird die obere Schwenkschicht so gesteuert, dass sie mit der Luftausblasrichtung des oberen Luftauslasses übereinstimmt, und die untere Schwenkschicht so gesteuert, dass sie mit der Luftausblasrichtung des unteren Luftauslasses übereinstimmt; und/oder
Falls der tatsächliche Arbeitsmodus ein Heizmodus ist und die tatsächliche Innentemperatur höher oder gleich der vom Benutzer voreingestellten Temperatur ist, dann werden die obere und die untere Schwingklappe periodisch schwingen gesteuert.
wobei der Schritt, die obere Luftleitplatte, die obere Schwingblende, die untere Luftleitplatte und die untere Schwingblende basierend auf dem tatsächlichen Arbeitsmodus und dem Vergleichsergebnis zu steuern, Folgendes umfasst:
in einem Fall, in dem der tatsächliche Betriebsmodus ein Kühlmodus ist, wenn die tatsächliche Innentemperatur höher als die vom Benutzer voreingestellte Temperatur ist und der Temperaturunterschied zwischen der tatsächlichen Innentemperatur und der vom Benutzer voreingestellten Temperatur größer oder gleich einem voreingestellten zweiten Temperaturunterschiedsschwellenwert ist, dann die obere und die untere Schwingklappe dazu bringen, periodisch zu schwingen; und/oder
Falls der tatsächliche Betriebsmodus ein Kühlmodus ist und die tatsächliche Raumtemperatur niedriger oder gleich der vom Benutzer voreingestellten Temperatur ist, wird die obere Schwenkschneide so gesteuert, dass sie mit der Luftausblasrichtung des oberen Luftauslasses übereinstimmt, und die untere Schwenkschneide so gesteuert, dass sie mit der Luftausblasrichtung des unteren Luftauslasses übereinstimmt.

2. Die Steuerungsmethode nach Anspruch 1, wobei eine Kältemitterkreislaufschleife zwischen dem Innenraum-Wärmetauscher und einem außen angeordneten Kompressor gebildet wird, und wenn die obere Luftlenkplatte, die obere Schwenkschicht, die untere Luftlenkplatte und die untere Schwenkschicht basierend auf dem tatsächlichen Arbeitsmodus und dem Vergleichsergebnis gesteuert werden, umfasst die Steuerungsmethode weiterhin:
Falls der tatsächliche Betriebsmodus ein Heizmodus ist und die tatsächliche Raumtemperatur unter der vom Benutzer voreingestellten Temperatur liegt und die Temperaturdifferenz zwischen der tatsächlichen Raumtemperatur und der vom Benutzer voreingestellten Temperatur größer oder gleich einer voreingestellten ersten Temperaturdifferenzschwelle ist, oder falls der tatsächliche Betriebsmodus ein Kühlmodus ist und die tatsächliche Raumtemperatur über der vom Benutzer voreingestellten Temperatur liegt und die Temperaturdifferenz zwischen der tatsächlichen Raumtemperatur und der vom Benutzer voreingestellten Temperatur größer oder gleich einer voreingestellten zweiten Temperaturdifferenzschwelle ist, dann den Kompressor so einstellen, dass er mit einer ersten voreingestellten Leistung läuft; und/oder
Wenn der tatsächliche Betriebsmodus ein Heizmodus ist und die tatsächliche Innentemperatur höher oder gleich der vom Benutzer voreingestellten Temperatur ist, oder wenn der tatsächliche Betriebsmodus ein Kühlmodus ist und die tatsächliche Innentemperatur niedriger oder gleich der vom Benutzer voreingestellten Temperatur ist, dann den Kompressor so einstellen, dass er mit einer zweiten voreingestellten Leistung läuft;
wobei die erste voreingestellte Leistung größer als die zweite voreingestellte Leistung ist.

3. Die Steuermethode nach Anspruch 1, bei der vor dem Steuern der oberen Luftleitplatte, der oberen Schwingflügel, der unteren Luftleitplatte und der unteren Schwingflügel basierend auf dem tatsächlichen Arbeitsmodus und dem Vergleichsergebnis, die Steuermethode ferner umfasst:
die Temperaturdifferenz zwischen der tatsächlichen Innenraumtemperatur und der vom Benutzer voreingestellten Temperatur berechnen;
eine Erwärmungszeit für die Temperaturdifferenz ermitteln, die einem ersten Temperaturdifferenzschwellenwert entspricht, bis die tatsächliche Raumtemperatur während der ersten Heizung der Klimaanlage der vom Benutzer voreingestellten Temperatur entspricht;
die Änderungsbeziehung der Öffnungsgrade der oberen Luftleitplatte und/oder der unteren Luftleitplatte mit der Zeit anhand des ersten voreingestellten Winkels und des zweiten voreingestellten Winkels der oberen Luftleitplatte und/oder der unteren Luftleitplatte sowie der Heizzeit bestimmen; und
Die Öffnungsgrade der oberen Luftführungsschale und/oder der unteren Luftführungsschale werden während des späteren Erwärmens entsprechend der Änderungsbeziehung angepasst.

4. Die Steuerungsmethode nach Anspruch 3, wobei das Veränderungsverhältnis der Öffnungsgrade der oberen Luftleitplatte und/oder der unteren Luftleitplatte mit der Zeit ein lineares Verhältnis oder ein stufenweise veränderndes Verhältnis ist.

5. Die Steuerungsmethode nach Anspruch 1, wobei vor der Steuerung der oberen Luftleitplatte, der oberen Schwingklappe, der unteren Luftleitplatte und der unteren Schwingklappe basierend auf dem tatsächlichen Arbeitsmodus und dem Vergleichsergebnis, die Steuerungsmethode ferner umfasst:
die Differenz zwischen der tatsächlichen Innentemperatur und der vom Benutzer vorgegebenen Temperatur berechnen; und
das Öffnungsgrad der oberen Luftleitplatte oder der unteren Luftleitplatte entsprechend einer vorgegebenen Korrespondenzbeziehung zwischen den Öffnungsgraden der oberen Luftleitplatte und/oder der unteren Luftleitplatte und der Temperaturdifferenz steuern.

6. Die Steuerungsmethode nach Anspruch 1, wobei der erste voreingestellte Winkel ein maximaler Öffnungswinkel der oberen Luftleitplatte oder der unteren Luftleitplatte ist; und/oder
der zweite voreingestellte Winkel und/oder der dritte voreingestellte Winkel beträgt 45°; und/oder
Der vierte voreingestellte Winkel ist der Winkel, bei dem die obere Luftführungsschablone oder die untere Luftführungsschablone geschlossen ist.

7. Die Steuerungsmethode nach Anspruch 1, bei der der erste Temperaturdifferenzschwellenwert und/oder der zweite Temperaturdifferenzschwellenwert 5°C beträgt; oder
die erste Temperaturdifferenzschwelle und/oder die zweite Temperaturdifferenzschwelle sind beliebige Werte zwischen 3°C und 7°C.

## Revendications

1. Un procédé de commande pour un climatiseur, dans laquelle un échangeur de chaleur intérieur et un ventilateur sont disposés dans un boîtier du climatiseur ; une sortie d'air supérieure et une sortie d'air inférieure sont disposées sur un côté avant du boîtier, une plaque guide d'air supérieure et une pale oscillante supérieure sont disposées entre la sortie d'air supérieure et le ventilateur, et une plaque guide d'air inférieure et une pale oscillante inférieure sont disposées entre la sortie d'air inférieure et le ventilateur ; les plaques guide d'air supérieure et inférieure sont respectivement pourvues de plusieurs trous d'air s'étendant dans leur propre direction d'épaisseur, la méthode de contrôle comprenant :
acquérir (S1) une température intérieure réelle ;
comparer (S2) la température intérieure réelle avec une température prédéfinie par l'utilisateur ;
déterminer (S3) si le mode de fonctionnement réel du climatiseur est un mode de chauffage ou un mode de refroidissement ; et la méthode de contrôle étant **caractérisée en ce qu'**elle comprend en outre :
contrôler (S4) la plaque guide d'air supérieure, la lame oscillante supérieure, la plaque guide d'air inférieure et la lame oscillante inférieure en fonction du mode de travail réel et d'un résultat de comparaison;
où l'étape de contrôler la plaque guide d'air supérieure, la lame oscillante supérieure, la plaque guide d'air inférieure et la lame oscillante inférieure en fonction du mode de fonctionnement réel et du résultat de comparaison comprend:
Dans un cas où le mode de fonctionnement réel est un mode de chauffage, si la température intérieure réelle est inférieure à la température prédéfinie par l'utilisateur et que la différence de température entre la température intérieure réelle et la température prédéfinie par l'utilisateur est supérieure ou égale à un premier seuil de différence de température prédéfini, alors ajuster les degrés d'ouverture de la plaque de guide d'air supérieure et de la plaque de guide d'air inférieure à un premier angle prédéfini ; et si la température intérieure réelle est supérieure ou égale à la température prédéfinie par l'utilisateur, alors ajuster les degrés d'ouverture de la plaque de guide d'air supérieure et de la plaque de guide d'air inférieure à un deuxième angle prédéfini ; et/ou
Dans le cas où le mode de fonctionnement réel est un mode de refroidissement, si la température réelle intérieure est supérieure à la température prédéfinie par l'utilisateur et que la différence de température entre la température réelle intérieure et la température prédéfinie par l'utilisateur est supérieure ou égale à un seuil prédéfini de différence de température secondaire, alors ajuster l'ouverture de la plaque guide d'air supérieure à un troisième angle prédéfini, et simultanément, ajuster l'ouverture de la plaque guide d'air inférieure à un quatrième angle prédéfini ; et si la température réelle intérieure est inférieure ou égale à la température prédéfinie par l'utilisateur, alors ajuster les ouvertures de la plaque guide d'air supérieure et de la plaque guide d'air inférieure à un quatrième angle prédéfini.
où le premier angle prédéfini est supérieur au deuxième angle prédéfini, et le troisième angle prédéfini est supérieur au quatrième angle prédéfini ;
où l'étape de contrôle de la plaque guide d'air supérieure, de la lame oscillante supérieure, de la plaque guide d'air inférieure et de la lame oscillante inférieure en fonction du mode de fonctionnement réel et du résultat de comparaison comprend :
Dans un cas où le mode de fonctionnement réel est un mode de chauffage, si la température intérieure réelle est inférieure à la température prédéfinie par l'utilisateur et que la différence de température entre la température intérieure réelle et la température prédéfinie par l'utilisateur est supérieure ou égale à un seuil de différence de température prédéfini, alors contrôler la pale oscillante supérieure pour qu'elle soit alignée avec la direction du souffle de la sortie d'air supérieure, et contrôler la pale oscillante inférieure pour qu'elle soit alignée avec la direction du souffle de la sortie d'air inférieure ; et/ou
Dans le cas où le mode de fonctionnement réel est un mode de chauffage, si la température intérieure réelle est supérieure ou égale à la température prédéfinie par l'utilisateur, alors contrôler les ailettes oscillantes supérieure et inférieure pour qu'elles oscillent périodiquement ;
où l'étape de contrôle de la plaque guide d'air supérieure, de la lame oscillante supérieure, de la plaque guide d'air inférieure et de la lame oscillante inférieure en fonction du mode de fonctionnement réel et du résultat de comparaison comprend :
Dans le cas où le mode de fonctionnement réel est un mode de refroidissement, si la température réelle intérieure est supérieure à la température prédéfinie par l'utilisateur et que la différence de température entre la température réelle intérieure et la température prédéfinie par l'utilisateur est supérieure ou égale à un seuil de différence de température prédéfini, alors contrôler les ailettes oscillantes supérieure et inférieure pour osciller périodiquement ; et/ou
Dans le cas où le mode de fonctionnement réel est un mode de refroidissement, si la température intérieure réelle est inférieure ou égale à la température prédéfinie par l'utilisateur, alors contrôler la lame oscillante supérieure pour qu'elle soit cohérente avec la direction du souffle de la sortie d'air supérieure, et contrôler la lame oscillante inférieure pour qu'elle soit cohérente avec la direction du souffle de la sortie d'air inférieure.

2. Le procédé de commande selon la revendication 1, dans lequel une boucle de circulation de fluide frigorigène est formée entre l'échangeur de chaleur intérieur et un compresseur disposé à l'extérieur, et lorsque les plaques directrices d'air supérieure, la lame oscillante supérieure, la plaque directrice d'air inférieure et la lame oscillante inférieure sont contrôlées en fonction du mode de fonctionnement réel et du résultat de comparaison, le procédé de commande comprend en outre :
Dans le cas où le mode de fonctionnement réel est un mode de chauffage, si la température intérieure réelle est inférieure à la température prédéfinie par l'utilisateur et que la différence de température entre la température intérieure réelle et la température prédéfinie par l'utilisateur est supérieure ou égale à un premier seuil de différence de température prédéfini, ou dans le cas où le mode de fonctionnement réel est un mode de refroidissement, si la température intérieure réelle est supérieure à la température prédéfinie par l'utilisateur et que la différence de température entre la température intérieure réelle et la température prédéfinie par l'utilisateur est supérieure ou égale à un deuxième seuil de différence de température prédéfini, alors contrôler le compresseur pour qu'il fonctionne à une première puissance prédéfinie ; et/ou
si le mode de fonctionnement actuel est un mode de chauffage et que la température intérieure réelle est supérieure ou égale à la température prédéfinie par l'utilisateur, ou si le mode de fonctionnement actuel est un mode de refroidissement et que la température intérieure réelle est inférieure ou égale à la température prédéfinie par l'utilisateur, alors contrôler le compresseur pour qu'il fonctionne à une deuxième puissance prédéfinie ;
où la première puissance prédéfinie est supérieure à la deuxième puissance prédéfinie.

3. Le procédé de commande selon la revendication 1, dans lequel, avant de commander la plaque de guide d'air supérieure, la pale oscillante supérieure, la plaque de guide d'air inférieure et la pale oscillante inférieure en fonction du mode de fonctionnement réel et du résultat de comparaison, le procédé de commande comprend en outre :
calculer la différence de température entre la température intérieure réelle et la température prédéfinie par l'utilisateur ;
acquérir un temps de chauffage pour que l'écart de température atteigne un premier seuil d'écart de température, jusqu'à ce que la température intérieure réelle soit égale à la température prédéfinie par l'utilisateur lors du premier chauffage du climatiseur ;
déterminer une relation de changement des degrés d'ouverture de la plaque guide d'air supérieure et/ou de la plaque guide d'air inférieure en fonction du temps, selon un premier angle prédéfini et un deuxième angle prédéfini de la plaque guide d'air supérieure et/ou de la plaque guide d'air inférieure et du temps de chauffage ; et
Ajuster les degrés d'ouverture de la plaque guide d'air supérieure et/ou de la plaque guide d'air inférieure pendant le chauffage ultérieur en fonction de la relation de changement.

4. Le procédé de commande selon la revendication 3, dans lequel la relation de changement des degrés d'ouverture de la plaque guide d'air supérieure et/ou de la plaque guide d'air inférieure avec le temps est une relation linéaire ou une relation de changement par étapes.

5. Le procédé de commande selon la revendication 1, dans lequel, avant de commander la plaque guide d'air supérieure, la lame balancée supérieure, la plaque guide d'air inférieure et la lame balancée inférieure en fonction du mode de fonctionnement réel et du résultat de comparaison, le procédé de commande comprend en outre :
calculer la différence de température entre la température intérieure réelle et la température prédéfinie par l'utilisateur ; et
contrôler le degré d'ouverture de la plaque guide d'air supérieure ou de la plaque guide d'air inférieure selon une correspondance prédéfinie entre les degrés d'ouverture de la plaque guide d'air supérieure et/ou de la plaque guide d'air inférieure et la différence de température.

6. Le procédé de commande selon la revendication 1, dans lequel l'angle prédéfini premier est un angle d'ouverture maximal de la plaque guide d'air supérieure ou de la plaque guide d'air inférieure ; et/ou
l'angle prédéfini deuxième et/ou l'angle prédéfini troisième sont de 45° ; et/ou
le quatrième angle prédéfini est un angle à partir duquel la plaque guide d'air supérieure ou la plaque guide d'air inférieure est fermée.

7. Le procédé de commande selon la revendication 1, dans lequel le premier seuil de différence de température et/ou le deuxième seuil de différence de température sont de 5°C ; ou
la première limite de différence de température et/ou la deuxième limite de différence de température sont toute valeur comprise entre 3°C et 7°C.
